# EUROPÄISCHE PATENTSCHRIFT

(11) **EP 0 659 696 B1**
(45) Veröffentlichungstag und Bekanntmachung des Hinweises auf die Patenterteilung: **29.07.1998**
(21) Anmeldenummer: 94203611.2
(22) Anmeldetag: 13.12.1994
(51) Int. Cl.: C02F 11/16, C02F 3/04, C02F 3/10, C05F 17/00

(54) **Verfahren zur Reinigung von Abwasser aus der Kompostierung**
Process for purification of waste water originating from composting
Procédé pour la purification d'eau résiduaire provenant du compostage

(30) Priorität: 21.12.1993 DE 4343767
(43) Veröffentlichungstag der Anmeldung: 28.06.1995
(73) Patentinhaber: METALLGESELLSCHAFT AG, 60323 Frankfurt am Main (DE)
(72) Erfinder: Vollmer, Friedel, D-44652 Herne (DE); Scholz, Werner, Dr., D-44532 Lünen (DE); Listringhaus, Walter, D-45731 Waltrop (DE)

(56) Entgegenhaltungen:
- EP-A- 0 409 367
- DE-A- 3 428 798
- DE-A- 3 805 615
- DE-A- 4 307 584
- FR-A- 1 134 377
- FR-A- 2 631 328
- GB-A- 543 865

## Beschreibung

Die vorliegende Erfindung betrifft ein Verfahren zur Verminderung des Schadstoffgehalts und zur Senkung des Ammoniumgehalts sowie der CSB- und BSB₅-Werte im Abwasser aus der Kompostierung.

Ein solches Abwasser ist zur Einleitung in eine kommunale Kläranlage bestimmt. Diese Einleitung erfordert aufgrund der sich verschärfenden Umweltschutzgesetze und der beschränkenden Auflagen der Kommunen für die Abwasserinhaltsstoffe eine entsprechende Vorbehandlung, da in einem solchen Abwasser häufig hohe Belastungen an Phosphor- und Stickstoffverbindungen und zum Teil erhebliche Reste an organischen Substanzen enthalten sind. In Kompostierungsanlagen zur Entsorgung bzw. Verwertung von Bioabfällen fallen Abwässer an, deren CSB- und BSB₅-Werte sowie deren Ammoniumgehalt die Einleitgrenzwerte vieler Kläranlagen überschreiten.

Aus DE-PS 38 05 615 ist ein Verfahren zur Verminderung des Schadstoffgehaltes von bereits vorbehandeltem Abwasser bekannt. Dabei durchläuft das Abwasser eine Vielzahl von Reinigungsstufen, in denen es jeweils großflächig verteilt von oben auf eine aus Biomasse, bevorzugt Stroh und ganz besonders bevorzugt Stroh in gehäckselter Form, gebildete Füllung aufgebracht wird und durch Schwerkrafteinwirkung zwischen den Partikeln der Füllung durchsickert und nach unten abläuft, um ggf. anschließend in eine nächste Reinigungsstufe einzutreten. Zur Erzielung einer aeroben Fermentation wird ein Luftstrom von unten nach oben durch die Füllung jeder Reinigungsstufe geführt. Hinter der letzten Reinigungsstufe wird ein Sumpf gebildet, in dem sich Feststoffe als Schlamm absetzen. Das gereinigte Abwasser wird oberhalb der Schlammzone abgeleitet. Die Biomasse wird zyklisch nach ihrer weitgehenden Fermentierung gegen frische Biomasse ausgetauscht. Um die Zahl der baulich ausgeführten Reinigungsstufen zu beschränken (im Extremfall auf eine einzige Stufe) ist vorgesehen, daß das Abwasser bei seiner Reinigung dieselbe Reinigungsstufe mehrfach durchläuft. Hierzu wird eine geeignete Rezyklisierung, z.B. von der letzten zur ersten Reinigungsstufe, eingeführt. Mit dieser Rezyklisierung kann dann jeweils ein Teil des aus der letzten Reinigungsstufe entnommenen geklärten Abwassers wieder in die erste Stufe zurückgeführt werden, während der andere Teil ausreichend gereinigt z.B. in die kommunale Kläranlage abgeleitet wird.

Die Verteilung des Abwassers soll möglichst gleichmäßig über die horizontale Querschnittsfläche der Füllung erfolgen. Gleichzeitig wird von unten Luft durch die Strohfüllung geblasen, so daß ein intensiver aerober Fermentationsprozeß einsetzt. Leichtflüchtige Bestandteile des Abwassers, im wesentlichen Ammoniak, werden von dem Luftstrom erfaßt und weggeführt. Zur Reinigung der Abluft ist ein Biofilter zur biologischen Reinigung dieser Bestandteile vorgesehen.

Die Abscheidung anderer Stickstoffverbindungen und der Phosphorverbindungen (z.B. Nitrate und Phosphate) erfolgt primär durch Einbindung in den entstehenden Strohkompost. Während dieses Kompostierungsvorgangs wird die organische Belastung des Rohwassers weitgehend abgebaut.

Dabei erfolgt die Umsetzung des Kohlenstoffs aus der organischen Belastung des Rohwassers und teilweise aus dem Stroh zu Kohlendioxid und zusammen mit dem Stickstoff aus den Stickstoffverbindungen des Rohwassers zur Bakterienmasse. Zum Aufbau der Zellsubstanz der aeroben Bakterien werden dem Rohwasser auch Phosphorverbindungen entzogen.

Nachteilig ist hierbei, daß in Abwässern aus Kompostierungsanlagen zur Entsorgung bzw. Verwertung von Biomüll die CSB- und BSB₅-Werte sowie der Ammoniumgehalt die Einleitgrenzwerte der Kläranlagen überschreiten.

Aufgabe der vorliegenden Erfindung ist es, ein Verfahren zur Verminderung des Schadstoffgehalts und zur Senkung des Ammoniumgehalts sowie der CSB- und BSB₅-Werte im Abwasser aus Kompostierungsanlagen zur Entsorgung bzw. Verwertung von Bioabfällen bereitzustellen, das wirtschaftlich ist, einen geringen Energieverbrauch und geringen Verbrauch an Betriebs- und Hilfsstoffen erfordert, wobei alle Materialien aus der Kompostierung abgeführt und nach Gebrauch in die Kompostierung zurückgeführt werden.

Die Aufgabe der vorliegenden Erfindung wird dadurch gelöst, daß
a) das Abwasser aus der Kompostierung von Feststoffen abgetrennt wird,
b) das Abwasser von Schlamm befreit wird und anschließend mindestens einmal von oben auf eine aus der Biomasse aus der Kompostierung mit einer Partikelgröße > 25 mm gebildete Füllung aufgebracht wird und durch Schwerkrafteinwirkung zwischen den Partikeln der Füllung durchsickert und nach unten abläuft, das mit Schlamm und Feststoffen beladene Abwasser von Feststoffen und Schlamm abgetrennt wird und ein Teil der Wassermenge abgeleitet wird,
c) die Abluft aus der Kompostierung zur Erzielung einer aeroben Fermentation als Luftstrom von unten nach oben durch die Füllung gemäß Verfahrensstufe (b) geführt wird und das Abwasser durch die Abluft auf eine Temperatur von 25°C bis 35°C eingestellt wird,
d) die Abluft aus der Reinigung gemäß Verfahrensstufe (b) in einem Biofilter gereinigt und in die Umgebung abgeleitet wird.

Das erfindungsgemäße Verfahren hat den Vorteil, daß die auf einem Kompostwerk vorhandenen Ressourcen genutzt und keine zusätzlich zu entsorgenden Reststoffe verursacht werden. Das verwendete Füllkörpermaterial wird nach einer Nutzungsdauer von einigen Monaten wieder in den Kompostierungsprozeß zurückgeführt. Das Verfahren erfordert im Vergleich zum Stand der Technik einen geringen Energieverbrauch, geringen Verbrauch an Betriebs- und Hilfsstoffen sowie niedrige Investitionskosten und einen kleinen Betriebs- und Wartungsaufwand.

Ein besonderer Vorteil des erfindungsgemäßen Verfahrens liegt im Vergleich zu dem aus DE-PS 38 05 615 bekannten Verfahren darin, daß der Druckverlust des Luftstroms, der durch die Füllung geleitet wird, aufgrund der Partikelgröße > 25 mm weitaus geringer ist. Dadurch wird Energie gespart, da für den Luftstrom kein starker Druck erforderlich ist, verglichen mit anderen Füllungen. Die erfindungsgemäße Füllschicht bleibt über längere Zeit formstabil und wird nicht so schnell verunreinigt wie Schichten aus anderem Material.

Der Wartungsaufwand ist für eine Anlage zur Durchführung des erfindungsgemäßen Verfahrens gering und beschränkt sich auf die wöchentliche Kontrolle des Druckverlustes und der Biofilter.

Ein weiterer Vorteil des erfindungsgemäßen Verfahrens liegt darin, daß durch die Füllkörperschicht ein Luftstrom aus dem Kompostierungsprozeß geleitet wird, der das Abwasser auf eine für den Reinigungsprozeß günstige Temperatur von 25°C bis 35°C aufwärmt. Die Temperatur des Luftstroms und die große Austauschfläche der Füllkörperschicht bilden gute Voraussetzungen zur Anreicherung des Abwassers mit Sauerstoff und zum Austrag von Ammoniak. Auf der Füllkörperschicht bildet sich innerhalb von wenigen Stunden bis zu einigen Tagen ein biologischer Rasen, welcher die organischen Inhaltsstoffe des Abwassers abbaut. Durch die optimale Sauerstoffversorgung und Bereitstellung eines Kohlenstoffträgers, nämlich der Füllkörperschicht aus organischem Material, sowie durch die günstige Temperatur herrschen ideale Bedingungen zum biologischen Abbau des Ammoniums und der Stoffe, welche zu hohen CSB- und BSB₅-Werten beitragen. Das Entfernen des freiwerdenden Ammoniaks wird ebenfalls durch die verfahrensgemäße Temperatur unterstützt.

Nach der vorliegenden Erfindung kann als Luftstrom der von unten durch die Füllschicht geleitet wird, die warme Abluft aus der Intensivrotte verwendet werden. Die Abluft aus der Intensivrotte, die eine Temperatur bis zu 70°C haben kann, wird zunächst durch einen Wärmeaustauscher geleitet. Durch die Abkühlung der Abluft aus der Intensivrotte kann die Zuluft zu der Intensivrotte aufgewärmt werden.

Für die Füllung kann besonders bevorzugt die Siebfraktion > 25 mm aus der Nachrotte verwendet werden. In der Nachrotte reift der Frischkompost aus der Intensivrotte nach. Nach Beendigung der Nachrotte wird der Kompost auf 25 mm abgesiebt. Die Siebfraktion > 25 mm aus der Nachrotte kann erfindungsgemäß sehr wirkungsvoll für die Füllung zur Reinigung von Abwasser aus dem Kompostierungsprozeß, nämlich aus der Intensiv- und Nachrotte, verwendet werden. Diese Füllung hat die bereits erwähnten Vorteile, wodurch die Aufgabe besonders gut gelöst werden kann. Das verbrauchte Füllstoffmaterial wird nach einer Nutzungsdauer von einigen Monaten in die Nachrotte zurückgeführt und bleibt somit im Kompostierungsprozeß. Es fallen daher keine Reststoffe an, die entsorgt oder deponiert werden müssen. Die in den Verfahrensstufen (a) und (b) abgetrennten Feststoffe und Schlamm werden ebenfalls in den Kompostierungsprozeß abgeführt, so daß auch hier keine Reststoffe anfallen, die entsorgt oder deponiert werden müssen.

Die Verwendung der Abluft aus der Intensivrotte hat nicht nur den Vorteil, daß eine warme Luft verwendet wird, sondern daß die Luft mit biologisch-organischen Stoffen befrachtet ist und das Abwasser im Gegenstrom überstreicht.

Eine vorteilhafte Ausgestaltung der Erfindung ist, daß der pH-Wert in der Verfahrensstufe (b) durch Zugabe von Kalkmilch oder Natronlauge auf 8 bis 11 eingestellt wird. Bei Abwasserzusammensetzungen, welche ein für den biologischen Abbau der organischen Inhaltsstoffe ungünstiges Kohlenstoff/Stickstoff-Verhältnis aufweisen, werden durch die Heraufsetzung des pH-Wertes gute Ergebnisse bei der Entfernung von NH₃ erreicht. Es hat sich gezeigt, daß bis hin zu pH-Werten von 10 bis 11 die biologische Aktivität nicht beeinträchtigt wird.

Eine vorteilhafte Ausgestaltung der Erfindung ist, daß das Abwasser gemäß Verfahrensstufe (c) auf eine Temperatur von 28°C bis 32°C eingestellt wird. In diesem Temperaturbereich herrschen besonders gute Bedingungen zum biologischen Abbau des Ammoniums und der Stoffe, welche zu hohen CSB- und BSB₅-Werten beitragen. Für die Abtrennung des Ammoniaks werden bei dieser Temperatur besonders gute Ergebnisse erreicht.

Eine vorteilhafte Ausgestaltung der Erfindung ist, daß die Aufbringung des Abwassers auf die Füllung gemäß Verfahrensstufe (b) in einem geschlossenen isolierten Behälter erfolgt. Als geschlossener isolierter Behälter wird ein Container verwendet, der an die Zuluftleitung eines Intensivrottestranges angeschlossen wird. Die 10- bis 14-tägige Rottezeit (Intensivrotte) wird in Containern als Rottereaktoren durchgeführt. In der Intensivrotte werden mehrere Container in einem Intensivrottestrang zusammengefügt. Der Vorteil der Benutzung eines Containers liegt darin, daß er mobil und platzsparend ist.

Eine vorteilhafte Ausgestaltung der Erfindung ist, daß die Menge des gemäß Verfahrensstufe (a) von Feststoffen abgetrennten Abwassers aus der Kompostierung kleiner oder gleich der Menge des gemäß Verfahrensstufe (b) abgeleiteten Abwassers eingestellt wird.

Eine besonders vorteilhafte Ausgestaltung der Erfindung ist, daß die Ein- und Ableitung sowie Rezyklisierung des Abwassers gemäß Verfahrensstufe (b) kontinuierlich verläuft. Das erfindungsgemäße Verfahren kann sehr vorteilhaft kontinuierlich gefahren werden. Dazu wird ein Kreislauf aus vorzugsweise einem Reinigungscontainer und einem Vorlagebecken gebildet. Im Vorlagebecken wird das Abwasser von Schlamm und Feststoffen befreit und in den Reinigungscontainer geleitet und von dort als schlamm- und feststoffhaltiges Abwasser in das Vorlagebecken zurückgeführt. Im Vorlagebecken wird Abwasser aus der Kompostierung gesammelt und Abwasser als ausreichend gereinigtes Abwasser aus dem Vorlagebecken abgeführt. Der Kreislauf wird so lange durchlaufen, bis sich das Abwasser im Vorlagebecken an Schadstoffen und Ammonium so weit abgereichert hat und die CSB- und BSB₅-Werte so weit gesenkt werden, daß ein Teil des Abwassers kontinuierlich als ausreichend gereinigt in die öffentliche Kanalisation und damit zur Kläranlage abgeleitet werden kann.

Eine vorteilhafte Ausgestaltung der Erfindung ist, daß die verbrauchte Füllung gemäß Verfahrensstufe (b) in die Kompostierung überführt wird.

Erfindungsgemäß ist die Verwendung von Biomasse aus der Kompostierung mit einer Partikelgröße von > 25 mm als Füllung für das Verfahren gemäß den Ansprüchen 1 bis 7 vorgesehen. Dabei ist bevorzugt der Siebrückstand > 25 mm aus der Nachrotte als Füllmaterial vorgesehen. Dieses Füllmaterial bietet die Vorteile, daß es bereits mit Populationen verschiedener aerober Mikroorganismen besiedelt ist und kostenlos auf der Anlage zur Verfügung steht.

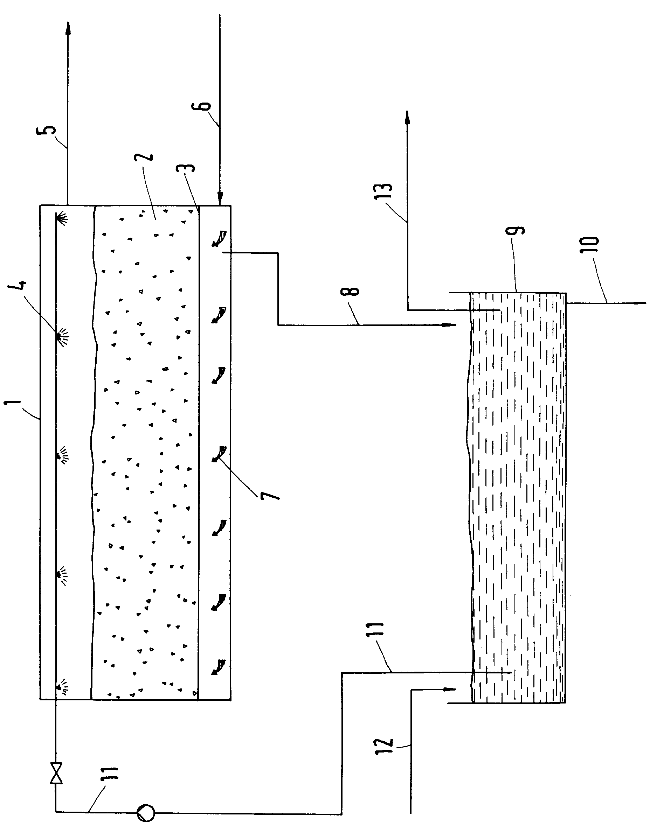

Die Erfindung wird anhand der Figur und des Beispiels erläutert.

### Figur

Die Figur zeigt schematisch den erfindungsgemäßen Kreislauf aus dem Reinigungsreaktor und dem Vorlagebecken. Der Reaktor besteht im wesentlichen aus einem stehenden, geschlossenen Reaktorbehälter (1), in dem ein Siebboden (3) eingezogen ist, der zur Aufnahme der Füllung (2) aus der Siebfraktion > 25 mm aus der Nachrotte vorgesehen ist. Durch die obere Stirnseite des Reaktorbehälters (1) wird das Abwasser durch ein System von Sprühdüsen (4) gleichmäßig auf die Füllschicht (2) verteilt. Am oberen Teil des Reaktors (1) führt eine Abluftleitung (5) hinaus zu einem nicht dargestellten Biofilter. Durch Luftdüsen (7) wird warme Prozeßluft in den Reaktorbehälter (1) durch den Siebboden (3) und die Füllschicht (2) geleitet. Unterhalb des Siebbodens (3) wird das Schlamm und Feststoffe enthaltende Abwasser gesammelt, über die Leitung (8) abgeführt und in das Vorlagebecken (9) eingeleitet. Aus dem Vorlagebecken (9) werden Feststoffe und Schlamm über die Leitung (10) in den Kompostierungsprozeß, d.h. in die Intensivrotte, abgeführt. Aus dem Vorlagebecken (9) wird von Feststoffen und Schlamm befreites Wasser über die Leitung (11) in den Reaktorbehälter (1) geleitet und über die Sprühdüsen (4) auf die Füllung (2) gleichmäßig verteilt. Über die Leitung (12) wird Abwasser aus dem Kompostierungsprozeß in das Vorlagebecken (9) eingeleitet. Über die Leitung (13) wird ausreichend gereinigtes Wasser abgeführt, wobei der Gehalt an Schadstoffen und der Ammoniumgehalt sowie die CSB- und BSB₅-Werte unterhalb der vorgeschriebenen Einleitgrenzwerte für die Kläranlagen liegen.

### Beispiel

Der Reinigungsprozeß wird kontinuierlich im Kreis, gebildet aus dem Reaktor (1) und dem Vorlagebecken (9), gefahren. Über die Leitung (12) wird kontinuierlich Abwasser aus dem Kompostierungsprozeß in das Vorlagebecken (9) eingeleitet und über die Leitung (13) wird kontinuierlich ausreichend gereinigtes Wasser aus dem Vorlagebecken (9) abgeleitet. Die Abwassermengen und die Ammoniumgehalte sowie die CSB- und BSB₅-Werte werden anhand der nachstehend dargestellten Tabelle dargelegt. Es werden nur die Ammoniumgehalte und die CSB- und BSB₅-Werte aufgeführt, da das erfindungsgemäße Verfahren eine neue und sehr wirksame Methode zur Verminderung des Ammoniumgehalts und Senkung der CSB- und BSB₅-Werte ist.

**Tabelle**

| Leitungen | 12 | 9 | 11 | 8 | 10 | 13 |
|---|---|---|---|---|---|---|
| Abwassermengen l/h | 500 | - | 10000 | 10000 | < 5 | 495 |
| Ammoniumgehalt mg/l | 300 | 80 | 80 | 69 | * | 80 |
| CSB mg/l | 14000 | 1400 | 1400 | 770 | * | 1400 |
| BSB₅ mg/l | 9000 | 600* | 600* | 180 | * | 600 |

| | | | | | | |
|---|---|---|---|---|---|---|
| * Ammonium und organische Stoffe werden auf der Nachrotte biologisch abgebaut. | | | | | | |

## Patentansprüche

1. Verfahren zur Verminderung des Schadstoffgehalts und zur Senkung des Ammoniumgehalts sowie der CSB- und BSB₅-Werte im Abwasser aus der Kompostierung, wobei
a) das Abwasser aus der Kompostierung von Feststoffen abgetrennt wird,
b) das Abwasser von Schlamm befreit wird und anschließend mindestens einmal von oben auf eine aus der Biomasse aus der Kompostierung mit einer Partikelgröße > 25 mm gebildete Füllung aufgebracht wird und durch Schwerkrafteinwirkung zwischen den Partikeln der Füllung durchsickert und nach unten abläuft, das mit Schlamm und Feststoffen beladene Abwasser von Feststoffen und Schlamm abgetrennt wird und ein Teil der Wassermenge abgeleitet wird,
c) die Abluft aus der Kompostierung zur Erzielung einer aeroben Fermentation als Luftstrom von unten nach oben durch die Füllung gemäß Verfahrensstufe (b) geführt wird und das Abwasser durch die Abluft auf eine Temperatur von 25°C bis 35°C eingestellt wird,
d) die Abluft aus der Reinigung gemäß Verfahrensstufe (b) in einem Biofilter gereinigt und in die Umgebung abgeleitet wird.

2. Verfahren nach Anspruch 1, dadurch gekennzeichnet, daß der pH-Wert in der Verfahrensstufe (b) durch Zugabe von Kalkmilch oder Natronlauge auf 8 bis 11 eingestellt wird.

3. Verfahren nach den Ansprüchen 1 oder 2, dadurch gekennzeichnet, daß das Abwasser gemäß Verfahrensstufe (c) auf eine Temperatur von 28°C bis 32°C eingestellt wird.

4. Verfahren nach den Ansprüchen 1 bis 3, dadurch gekennzeichnet, daß die Aufbringung des Abwassers auf die Füllung gemäß Verfahrensstufe (b) in einem geschlossenen isolierten Behälter erfolgt.

5. Verfahren nach den Ansprüchen 1 bis 4, dadurch gekennzeichnet, daß die Menge des gemäß Verfahrensstufe (a) von Feststoffen abgetrennten Abwassers aus der Kompostierung kleiner oder gleich der Menge des gemäß Verfahrensstufe (b) abgeleiteten Abwassers eingestellt wird.

6. Verfahren nach den Ansprüchen 1 bis 5, dadurch gekennzeichnet, daß die Ein- und Ableitung sowie Rezyklisierung des Abwassers gemäß Verfahrensstufe (b) kontinuierlich verläuft.

7. Verfahren nach den Ansprüchen 1 bis 6, dadurch gekennzeichnet, daß die verbrauchte Füllung gemäß Verfahrensstufe (b) in die Kompostierung überführt wird.

8. Verwendung von Biomasse aus der Kompostierung mit einer Partikelgröße > 25 mm als Füllung für das Verfahren gemäß den Ansprüchen 1 bis 7.

## Claims

1. A process of reducing the content of noxious substances and of lowering the ammonium content as well as the CSB and BSB₅ values in the composting effluent, wherein
a) the composting effluent is separated from solids,
b) the effluent is liberated from sludge and is subsequently at least once applied from to the top onto a filling formed of the biomass from the composting with a particle size > 25 mm and under the influence of gravity seeps through between the particles of the filling and flows out to the bottom, the effluent loaded with sludge and solids is separated from solids and sludge, and part of the amount of water is discharged,
c) for achieving an aerobic fermentation, the exhaust air from the composting is passed as an air stream from the bottom to the top through the filling in accordance with process stage (b), and the effluent is adjusted to a temperature of 25°C to 35°C by means of the exhaust air,
d) the exhaust air from the purification in accordance with process stage (b) is purified in a biofilter and discharged to the environment.

2. The process as claimed in claim 1, characterized in that the pH value in process stage (b) is adjusted to 8 to 11 by adding lime milk or sodium hydroxide solution.

3. The process as claimed in claims 1 or 2, characterized in that the effluent in accordance with process stage (c) is adjusted to a temperature of 28°C to 32°C.

4. The process as claimed in claims 1 to 3, characterized in that the application of the effluent onto the filling in accordance with process stage (b) is effected in a closed insulated container.

5. The process as claimed in claims 1 to 4, characterized in that the amount of the composting effluent separated from solids in accordance with process stage (a) is adjusted to be smaller than or equal to the amount of the effluent discharged in accordance with process stage (b).

6. The process as claimed in claims 1 to 5, characterized in that the introduction and discharge as well as the recirculation of the effluent in accordance with process stage (b) is effected continuously.

7. The process as claimed in claims 1 to 6, characterized in that the used filling in accordance with process stage (b) is transferred to the composting.

8. Use of the biomass from the composting with a particle size > 25 mm as filling for the process as claimed in claims 1 to 7.

## Revendications

1. Procédé de diminution de la teneur en substance polluante et d'abaissement de la teneur en ammonium, ainsi que des valeurs CSB et BSB₅ de l'eau résiduaire du compostage, qui consiste :
a) à séparer l'eau résiduaire provenant du compostage de matières solides,
b) à débarrasser l'eau résiduaire de boue et ensuite la mettre, au moins une fois par le haut, sur un garnissage formé de la biomasse provenant du compostage et ayant une granulométrie supérieure à 25 mm et à faire passer l'eau résiduaire, sous l'effet de la force de gravité, entre les particules du garnissage et à la faire s'écouler vers le bas, à séparer l'eau résiduaire, chargée de boue et de matières solides, des matières solides et de la boue et à dériver une partie de la quantité d'eau,
c) à envoyer l'air effluent provenant du compostage en vue d'obtenir une fermentation aérobie en tant que courant d'air de bas en haut dans le garnissage suivant le stade (b) du procédé et à régler l'eau résiduaire à une température de 25°C à 35°C par l'effluent d'air,
d) à épurer l'effluent d'air provenant d'épuration suivant le stade b) du procédé dans le biofiltre et à l'évacuer à l'extérieur.

2. Procédé suivant la revendication 1, caractérisé en ce qu'il consiste à régler le pH au stade (b) du procédé entre 8 et 11 par addition de lait de chaux ou de l'acide de soude.

3. Procédé suivant les revendications 1 ou 2, caractérisé en ce qu'il consiste à régler, à une température de 28°C à 30°C, l'eau résiduaire suivant le stade (c) du procédé.

4. Procédé suivant les revendications 1 à 3, caractérisé en ce qu'il consiste à effectuer la mise de l'eau résiduaire sur le garnissage suivant le stade (b) du procédé dans une cuve isolée fermée.

5. Procédé suivant les revendications 1 à 4, caractérisé en ce qu'il consiste à régler la quantité de l'eau résiduaire provenant du compostage, qui est séparée des matières solides suivant le stade (a) du procédé, à une valeur inférieure ou égale à la quantité de l'eau résiduaire dérivée suivant le stade (b) du procédé.

6. Procédé suivant les revendications 1 à 5, caractérisé en ce qu'il consiste à effectuer en continu l'entrée et l'évacuation ainsi que le recyclage de l'eau résiduaire suivant le stade (b) du procédé.

7. Procédé suivant les revendications 1 à 6, caractérisé en ce qu'il consiste à transférer le garnissage usé suivant le stade (b) du procédé au compostage.

8. Utilisation de biomasse provenant du compostage ayant une granulométrie supérieure à 25 mm comme garnissage pour le procédé suivant les revendications 1 à 7.
